# EUROPÄISCHE PATENTSCHRIFT

(11) **EP 2 925 166 B1**
(45) Veröffentlichungstag und Bekanntmachung des Hinweises auf die Patenterteilung: **16.11.2016**
(21) Anmeldenummer: 13818976.6
(22) Anmeldetag: 26.11.2013
(51) Int. Cl.: A23L 3/00

(54) **BEHÄLTERVERSCHLIESSVORRICHTUNG FÜR HOCHDRUCKKAMMER**
CONTAINER SEALING DEVICE FOR HIGH-PRESSURE CHAMBER
DISPOSITIF DE FERMETURE DE RÉCIPIENT POUR UNE CHAMBRE À HAUTE PRESSION

(30) Priorität: 28.11.2012 DE 102012023186
(43) Veröffentlichungstag der Anmeldung: 07.10.2015
(73) Patentinhaber: Uhde High Pressure Technologies GmbH, 58093 Hagen (DE)
(72) Erfinder: NÜNNERICH, Peter, 57080 Siegen (DE); KNAUF, Wilfried, 58313 Herdecke (DE)
(74) Vertreter: ThyssenKrupp Intellectual Property GmbH
(86) Internationale Anmeldenummer: PCT/EP2013/003557
(87) Internationale Veröffentlichungsnummer: WO 2014/082728

(56) Entgegenhaltungen:
- WO-A1-2011/091860

## Beschreibung

Die vorliegende Erfindung betrifft eine Vorrichtung für einen Behälterverschluss einer Hochdruckkammer zur Hochdruckbehandlung von beispielsweise verpackten Produkten, wobei die Produkte in der Hochdruckkammer von einem Hochdruckmedium beaufschlagt und mit einem Druck von bis zu 10.000 bar bzw. 1 GPa behandelt werden.

Zur Hochdruckbehandlung gehört ein Maschinenkomplex, bestehend aus
- einer verschließbaren Hochdruckkammer,
- einem Halterahmen, in dem die Hochdruckkammer während der Hochdruckbeaufschlagung gehalten wird,
- einer Schwenkvorrichtung, mit der die Hochdruckkammer seitlich aus dem Halterahmen herausgeschwenkt werden kann,
- mindestens einem stirnseitigen Verschluss für die Hochdruckkammer,
- einer Fördervorrichtung, mit der das Hochdruckmedium in die Hochdruckkammer hinein und nach der Behandlung wieder heraus gefördert wird, und
- ggf. einer Fördervorrichtung, mit der das zu behandelnde Produkt in die Hochdruckkammer hinein und nach der Behandlung wieder heraus gefördert wird, wobei die Beschickung natürlich auch manuell erfolgen kann.

Aufgrund des hohen Drucks bei der Hochdruckbehandlung hat es sich bewährt, die Hochdruckkammer in Form eines zylindrischen Körpers auszuführen. Die Hochdruckkammer weist an einem Ende, meistens an beiden Enden je einen Behälterverschluss auf. Um die zu behandelnden Produkte in die Hochdruckkammer einzuführen, wird die Hochdruckkammer im geöffneten Zustand zur Seite aus der Anlage heraus geschwenkt oder gefahren. Im geöffneten Zustand der Hochdruckkammer werden die Behälterverschlüsse der Hochdruckkammer durch Haltevorrichtungen der Anlage meistens am Rahmen und nicht an der Hochdruckkammer selbst verankert, werden also nicht mitverschwenkt.

Eine weitere Vorrichtung ist für die Steuerung der Behälterverschlüsse zuständig. Sobald die Hochdruckkammer beschickt ist, wird sie in den Halterahmen geschwenkt bzw. gefahren. In dieser Position wird die Hochdruckkammer mittels Verschlussvorrichtungen wie beispielsweise hydraulischen Zylindern mit dem Behälterverschluss oder den beiden Behälterverschlüssen verschlossen und dann verriegelt. Einer der Behälterverschlüsse weist üblicherweise eine Zugabemöglichkeit für ein Fluid auf sowie eine Ablassvorrichtung auf für verdrängte Luft, die beim Einlassen des Fluids aus dem Hochdruckbehälter entweichen soll. Ferner weist entweder einer der Behälterverschlüsse oder die Hochdruckkammer selbst eine Vorrichtung zur Aufgabe und zum Ablassen von Hochdruckfluid auf.

Die DE 10 2009 042 088 A1 beschreibt eine Vorrichtung und ein Verfahren zur Hochdruckbehandlung von Produkten, insbesondere verpackten Lebensmitteln. Hierzu wird eine Hochdruckkammer befüllt und stufenweise mit hohem Druck beaufschlagt, wobei besonderes Augenmerk auf den gesteuerten Druckbeaufschlagungs- und Druckentlastungsvorgang gerichtet wird. Das daraus bekannte Verfahren zur Haltbarmachung mittels Hochdruck besteht darin,
- den Hochdruckbehälter mit dem Produkt zu befüllen,
- den Verschluss an beiden Stirnseiten des Hochdruckbehälters soweit zu verschließen, dass das Fluid eingeleitet und verdrängte Luft abgelassen werden kann,
- danach diesen Verschluss sowie die Fluidzufuhr und den Luftablass ganz zu verschließen,
- dann einen vordefinierten erster Druck aufgebaut wird,
- dann mittels einer Hochdruckzuleitung weiteres Fluid in den Hochdruckbehälter einzuführen, bis der gewünschte Enddruck erreicht ist,
- diesen Druck eine bestimmte Zeit, etwa 2 bis 4 Minuten, aufrecht zu erhalten,
- dann das Fluid in geregelter Weise so abzulassen, dass der Druck wieder dem ersten Druck entspricht,
- dann durch Ablassen von Fluid den Druck weiter zu verringern und das Fluid ganz abzulassen,
- dann die Behälterverschlüsse zu öffnen und das haltbar gemachte Produkt zu entnehmen.

Hierbei stellt sich die technische Frage, wie die Haltevorrichtung des Hochdruckbehälters und die Einrichtungen zur Druckbeaufschlagung auszugestalten sind. Besonders problematisch ist hierbei, dass für die Haltbarmachung Drücke von 6000 bis 10000 bar, d.h. 600 bis 1000 hPa erforderlich sind. Selbst bei sehr massiver Ausführung der tragenden Teile ist nicht zu vermeiden, dass sich Halterahmen, Hochdruckbehälter, Verschlüsse, Hydraulikeinrichtungen, Rundöffnungen und Dichtungen dreiachsig verformen. Hierbei können plastische Verformungen und Undichtigkeiten entstehen, die zu vermeiden sind. Angestrebt wird hierbei, dass die gesamte Vorrichtung im Betrieb zwischen 10⁵ und 10⁶ Produktzyklen schadlos bewältigen kann.

Sowohl der Halterahmen, in dem die Hochdruckkammer gehalten wird, als auch die Hochdruckkammer, die im Betrieb die extrem hohen Druckkräfte durch den Betriebsdruck aufnehmen, werden unter Druckvorspannung mittels Autofrettage, Schrumpfen oder Wickeln hergestellt, wodurch ein sehr hoher zulässiger Betriebsdruck aufgebracht werden kann. Die hierbei noch ausreichende Sicherheit gegen die Fließgrenze des Materials wird entsprechend eingerechnet. Durch diese Vorspannung lässt sich eine optimale Materialausnutzung erzielen und somit die Anlage belastbar machen, die der hohen Druckspannung ausgesetzt ist. Die WO 2005 / 079966 A1 beschreibt zum Beispiel ein Verfahren zum Wickeln einer Hochdruckkammer.

WO 2010/102644 A1 beschreibt eine Hochdruckkammer, wobei die Druckkammer aus Zylinderabschnitten besteht, die axial mittels Befestigungselementen miteinander verbunden sind, und worin das zu behandelnde Produkt mit einem Druckmedium bei der Hochdruckbehandlung eingeschlossen wird. Die Druckkammer weist außerdem eine vorgespannte, mit Stahlband gewickelte Hülle auf. Die Stopfen der Druckkammer werden durch jeweils ein gewickeltes Rahmenwerk gehalten, wobei das Rahmenwerk nur senkrecht zur Achse der Druckkammer bewegbar ist. Aufgrund der Konstruktion ist das Risiko des schnellen Abnutzens der Befestigungselemente in den Trennfugen der Segmente absehbar.

Die DE 10 2005 014 835 A1 beschreibt eine Isostatpresse mit einem mehrteiligen, in einem Pressrahmen angeordneten Druckbehälter, wobei der Druckbehälter aus mehreren axial formschlüssig zusammengesetzten Druckbehältersegmenten und Verschlussdeckeln besteht.

WO 2011 / 091860 A1 betrifft eine Hochdruckkammer, enthaltend eine entnehmbare Körbe-Vorrichtung, wobei die zu behandelnden Produkte in Körben innerhalb der Hochdruckkammer einer Hochdruckbehandlung unterzogen werden. Die Körbe werden durch Elemente fest verankert in der Hochdruckkammer, damit die Körbe samt Inhalt nicht während des Betriebs umdrehen. Darüber hinaus ist in dieser Schrift auch offenbart, dass die Behälterverschlüsse der Hochdruckkammer durch eine Vorrichtung, die jeweils seitlich parallel zu dem Rahmengerüst angeordnet ist, getragen wird.

Ein weiteres technisches Problem besteht in der Abstützvorrichtung, die die bei Hochdruckbeaufschlagung auftretenden Kräfte zwischen Hochdruckbehälterverschluss und Haltevorrichtung überträgt. Die Abstützvorrichtung, so denn überhaupt eine Verwendung findet, wird üblicherweise geteilt ausgeführt, da in der Mitte eine Aussparung für den Hydraulikzylinder bestehen bleiben muss, welcher den Behälterverschluss schließt. Die Abstützvorrichtung wird mit Schwenkvorrichtungen quer zur Hochdruckbehälterachse in ihre Position gefahren. Auch die Abstützvorrichtung verformt sich, wenn ein Pressdruck von 6000 bis 10000 bar angelegt wird. Die Abstützvorrichtung liegt an der Haltevorrichtung an, wobei sehr große Kräfte zu übertragen sind. Pro Quadratmeter Querschnittsfläche des Hochdruckbehälters sind bei 6000 bis 10000 bar 600 MN (Mega-Newton) bis 1 GN (Giga-Newton) zu übertragen, bei einem typischen Rohrinnendurchmesser des Hochdruckbehälters von 0,3 m entspricht dies 54 bis 90 MN.

Für die Krafteinleitung der geteilten Abstützung in die Haltevorrichtung, welche eine zylindrische Aussparung für den Hydraulikzylinder aufweist, ergibt sich hierbei das technische Problem, dass die auftretenden Querspannungen bei Druckbeaufschlagungen die zylindrische Aussparung zu einer ovalen Form verformen. Hierdurch ergeben sich Undichtigkeiten und in der Folge erhebliche betriebliche Probleme, wenn die unter Hochdruck auftretenden elastischen Verformungen zu dauerhaften plastischen Verformungen führen.

Der Erfindung liegt daher das Problem zugrunde, eine konstruktiv einfache Anlage und ein wirtschaftliches Verfahren zur Hochdruckbehandlung zur Verfügung zu stellen, bei der die elastischen und plastischen Verformungen unter Hochdruck nicht zu betrieblichen Problemen führen.

Die Aufgabe wird gelöst durch eine Vorrichtung, aufweisend
- einen Halterahmen, in dem die Hochdruckkammer während der Hochdruckbeaufschlagung gehalten wird,
- eine Ausfahrvorrichtung, mit der die Hochdruckkammer seitlich aus dem Halterahmen herausgefahren werden kann,
- mindestens einen stirnseitigen Verschluss mit einem Verschlussstopfen für die Hochdruckkammer,
- mindestens einen Hydraulikantrieb zum Bewegen des stirnseitigen Verschlußstopfens in den Druckbehälter
- ein Leitungssystem mit Anschlüssen, mit dem das Hochdruckmedium in die Hochdruckkammer hinein und nach der Behandlung wieder heraus gefördert wird,
- eine Abstützvorrichtung, die zwischen den Stirnseiten der Hochdruckkammer und dem Halterahmen verlagerbar angeordnet ist und während der Hochdruck-Beaufschlagung die Kraft zwischen Behälterverschluss und Halterahmen überträgt,
   wobei
- die Aufnahme der aus dem Behandlungsdruck auf den Verschlußmechanismus wirkenden axialen Kräfte mittels eines als Halbkreisscheibe ausgeprägten Kraftübertragungsvorrichtung durchgeführt wird,
- die Rundseite der Hochdruckkammer abgewandt ist
- welche an ihrer der Hochdruckkammer zugewandten Seite je eine vertikale Abstützfläche oberhalb und unterhalb der Achse des Hochdruckbehälters aufweist,
- welche an ihrer der Hochdruckkammer zugewandten Seite fluchtend zur Achse des Hochdruckbehälters eine Aufnahme für einen Hydraulikzylinder mit seitlichen Anschlüssen für die Beaufschlagung mit Hydraulikflüssigkeit aufweist, und
- die Halbkreisscheiben eine Teil der Hydraulikdruck tragenden Außenhülle der Hydraulikzylinders bilden.

Die Halbkreisform hat den Vorteil, dass sie auf der kreisförmigen Seite in das Joch des Halterahmens passt, wenn dieser wie üblich gewickelt ist; die Wicklung hat hierbei große Vorteile bei der Aufnahme der Kräfte, da beim Wickeln eines Bandes oder eines Drahtes eine Vorspannung aufgebracht werden kann.

In einer vorteilhaften Ausgestaltung der Erfindung weisen die halbkreisförmigen Scheiben freistichartige Aussparungen auf, vorzugsweise werden die freistichartigen Aussparungen so konturiert, dass Belastungsspitzen an den halbkreisförmigen Scheiben im Bereich der Ausnehmung für den Hydraulikzylinder verringert werden. Diese Aussparungen bewirken, dass im Übergangsbereich der Abstützvorrichtung in die Halbkreisscheibe die Kerbspannungen verringert werden. Durch die Verringerung der Kerbspannungen werden auch die Verformungen in diesem Bereich verringert und somit die Neigung der Verformung des Hydraulikzylinders.

In einer weiteren vorteilhaften Ausgestaltung der Erfindung ist vorgesehen, dass der Hydraulikzylinderinnenteil in einer Buchse aus elastischem Material schwimmend gelagert wird. Als elastisches Material wird im Regelfall ein geeigneter Kunststoff ausgewählt.

In einer weiteren vorteilhaften Ausgestaltung der Erfindung ist vorgesehen, dass die Buchse mit der Dichtung der Hydraulik dicht verbunden ist.

Die erfindungsgemäßen Vorrichtung eignet sich besonders für ein Verfahren zur Haltbarmachung von Gütern mittels Beaufschlagung durch Hochdruck, darin bestehend,
- den auf beiden Seiten offenen Hochdruckbehälter in ausgefahrenem Zustand mit dem Produkt zu befüllen,
- den Hochdruckbehälter in den Halterahmen zu verfahren,
- den Verschluss an einer der beiden Stirnseiten des Hochdruckbehälters in Vorfüllposition verschließen,
- den Verschluss an der gegenüberliegenden Stirnseite soweit zu verschließen, dass das Fluid eingeleitet und die verdrängte Luft abgelassen werden kann,
- danach diesen Verschluss sowie die Fluidzufuhr und den Luftablass ganz zu verschließen,
- dann mittels einer Verlagerungsvorrichtung mindestens eine Abstützung zwischen Halterahmen und Verschluss des Hochdruckbehälters anzubringen,
- den Hochdruckbehälter zu verriegeln und den Hydraulikzylinder zurückzuziehen,
- daraufhin den Druck im Hydraulikzylinder zu entspannen,
- dann mittels einer Hochdruckzuleitung weiteres Fluid in den Hochdruckbehälter einzuführen, bis der gewünschte Enddruck erreicht ist,
- diesen Druck eine bestimmte Zeit aufrecht zu erhalten,
- dann das Fluid so abzulassen, dass der Druck wieder unter dem ersten Druck liegt,
- dann den Hydraulikzylinder wieder unter Druck an den Behälterverschluss heranzuführen,
- dann die Abstützung wieder zu entfernen,
- dann den Druck im Hochdruckbehälter durch Zurückfahren des Hydraulikzylinders mit dem Verschluss zu verringern,
- dann durch Ablassen von Fluid den Druck weiter zu verringern und das Fluid abzulassen,
- dann die Behälterverschlüsse zu öffnen,
- dann den Hochdruckbehälter aus dem Halterahmen herauszufahren,
- und das haltbar gemachte Produkt zu entnehmen.

Hierbei kann auch vorgesehen werden, dass der Verschluss mittels eines Hydraulikzylinders nach dem Verschließen des Hochdruckbehälters, der Fluidzufuhr und dem Luftablass axial weiter in den Hochdruckbehälter eingeschoben wird, bis ein Anschlag erreicht wird und ein vordefinierter erster Druck aufgebaut ist. Dieser Druck liegt vorzugsweise < 80 bar.

Die Erfindung wird nachfolgend anhand von 2 Skizzen näher erläutert. Hierbei zeigen:
Fig. 1: Einen Halterahmen mit Hochdruckbehälter, Hochdruckkammer und Verschluss
Fig. 2: Eine halbkreisförmige Kraftübertragungsvorrichtung im Schnitt

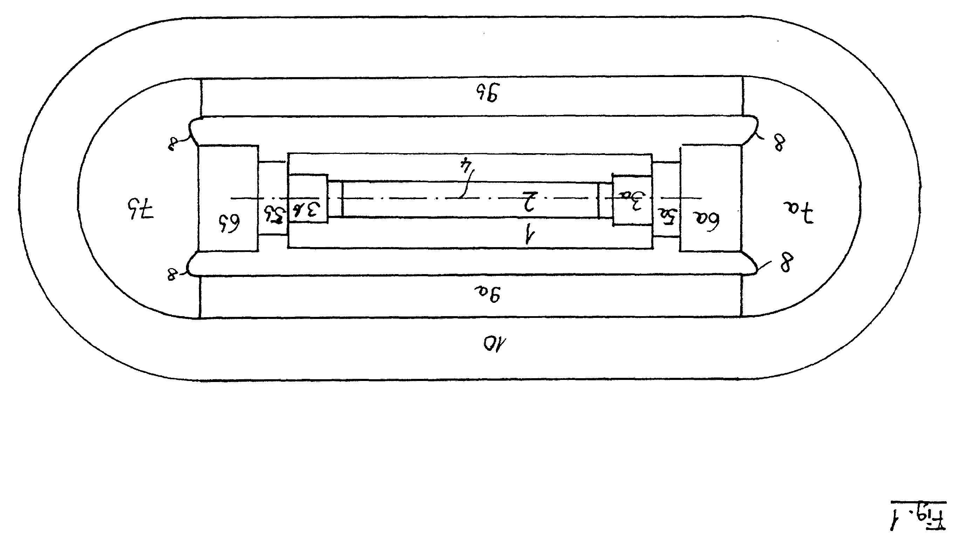

In Fig. 1 ist ein Hochdruckbehälter 1 mit einer Hochdruckkammer 2 gezeigt, der von den Verschlussstopfen 3a und 3b stirnseitig verschlossen ist. Hochdruckbehälter 1, Hochdruckkammer 2 und die Verschlussstopfen 3a und 3b haben runden Querschnitt um die Achse 4 des Hochdruckbehälters, die Verschlussstopfen 3a und 3b weisen außerdem Öffnungen für Hochdruckmedien und austretende Verdrängungsluft auf. Die Verschlusstopfen 3a und 3b besitzen je einen Absatz 5a und 5b, der jeweils als Auflagebund des Verschlussstopfens wirkt, die beide während der Druckbeaufschlagung stirnseitig am Hochdruckbehälter 1 anliegen. Diese stützen sich außen an die Abstützungen 6a und 6b, die quaderförmig ausgebildet und in der Bildebene geteilt sind. Sie besitzen ferner entlang der Achse 4 des Hochdruckbehälters eine kreisförmige Aussparung. Die Abstützungen 6a und 6b stützten sich an die Halbkreisscheiben 7a und 7b mit freistichartigen Aussparungen 8. Die Halbkreisscheiben 7a und 7b stützen sich gegen die Säulen des Halterahmens 9a und 9b. Sie werden mit der umlaufenden Drahtwicklung 10 zusammengehalten.

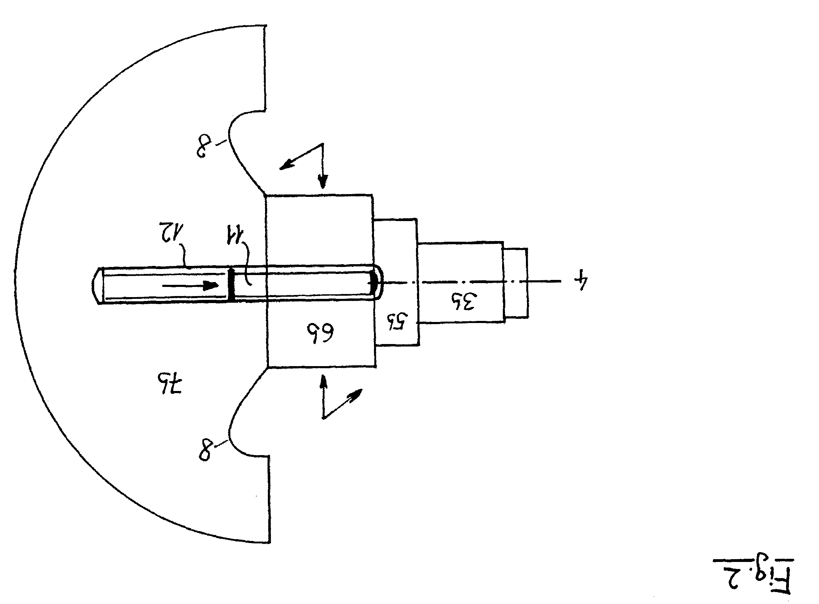

In Fig. 2 ist der Verschlussstopfen 3b mit dem Absatz 5b, der Abstützung 6b und der Halbkreisscheibe 7b gezeigt. Eingelassen in die Halbkreisscheibe 7b ist der Hydraulikkolben 11 in dem gleitend gelagerten Hydraulikzylinderinnenteil 12, der mit einem Hydrauliksystem verbunden ist (nicht gezeigt).

Wenn das Gut in die Hochdruckkammer 2 eingefüllt ist und sich der Hochdruckbehälter 1 im Halterahmen (7a, 7b, 9a, 9b, 10) befindet, werden zunächst die Verschlussstopfen 3a und 3 b mittels der Hydraulikkolben 11 in die Verschlussposition gebracht. Sodann wird Hochdruckmedium in die Hochdruckkammer gegeben, wobei Luft entweicht. Mittels des Hydraulikkolbens 11 wird der Verschlussstopfen weiter in die Hochdruckkammer eingeschoben, wobei die restliche Luft entweicht. Nach dem Verschließen des Luftaustritts wird der Verschlusstopfen 3a zw. 3b weiter eingeschoben, bis der Absatz 5a bzw. 5b am Hochdruckbehälter 1 anliegt. In diesem Zustand werden die Abstützungen 6a und 6b von der Seite eingeschoben. Der Kolben 11 wird ein Stück in den Zylinder 12 zurückgefahren und entlastet, der bereits anliegende Druck liegt danach an den Abstützungen 6a und 6b an, die ihn auf die Halbkreisscheiben 7a und 7b übertragen. Danach wird über eine Hochdruckpumpe (nicht gezeigt) Hochdruckmedium in die Hochdruckkammer gedrückt, welche ihrerseits die Verschlussstopfen 3a und 3b mit großer Kraft gegen die Abstützungen 6a und 6b drückt. Diese verformen die Halbkreisscheibe derart, dass auch der Hydraulikzylinderinnenteil 12 einen ovalen Querschnitt aufweist. Daher ist dieser gleitend in einer Kunststoffhülse gelagert. Da der Hydraulikkolben 11 während der Hochdruckbeaufschlagung drucklos ist, führt dies nicht zu Leckagen. Nach der Hochdruckbeaufschlagung kann der gleiche Vorgang rückwärts in gesteuerter Abfolge durchgeführt werden. Auf diese Weise ist eine betriebssichere und wirtschaftliche Methode der chargenweise Hochdruckbeaufschlagung möglich.

### Bezugszeichenliste:

- 1: Hochdruckbehälter
- 2: Hochdruckkammer
- 3, 3a, 3b: Verschlussstopfen
- 4: Achse des Hochdruckbehälters
- 5a, 5b: Absatz
- 6a, 6b: Abstützung
- 7a, 7b: Halbkreisscheibe
- 8: Freistichartige Aussparungen
- 9a, 9b: Säulen des Halterahmens
- 10: Drahtwicklung
- 11: Hydraulikkolben
- 12: Hydraulikzylinderinnenteil

## Patentansprüche

1. Vorrichtung zur Hochdruckbehandlung von Gütern in einer verschließbaren Hochdruckkammer, aufweisend
• einen Halterahmen, in dem die Hochdruckkammer (2) während der Hochdruckbeaufschlagung gehalten wird,
• eine Ausfahrvorrichtung, mit der die Hochdruckkammer (2) seitlich aus dem Halterahmen herausgefahren werden kann,
• mindestens einen stirnseitigen Verschluss mit einem Verschlussstopfen (3a, 3b) für die Hochdruckkammer (2),
• mindestens einen Hydraulikantrieb zum Bewegen des stirnseitigen Verschlußstopfens (3a, 3b) in den Druckbehälter
• ein Leitungssystem mit Anschlüssen, mit dem das Hochdruckmedium in die Hochdruckkammer hinein und nach der Behandlung wieder heraus gefördert wird,
• eine Abstützvorrichtung (6a, 6b), die zwischen den Stirnseiten der Hochdruckkammer (2) und dem Halterahmen verlagerbar angeordnet ist und während der Hochdruck-Beaufschlagung die Kraft zwischen Behälterverschluss und Halterahmen überträgt,
**dadurch gekennzeichnet, dass**
• die Aufnahme der aus dem Behandlungsdruck auf den Verschlußmechanismus wirkenden axialen Kräfte mittels eines als Halbkreisscheibe (7a, 7b) ausgeprägten Kraftübertragungsvorrichtung durchgeführt wird,
• die Rundseite der Hochdruckkammer abgewandt ist,
• welche an ihrer der Hochdruckkammer zugewandten Seite je eine vertikale Abstützfläche oberhalb und unterhalb der Achse des Hochdruckbehälters aufweist,
• welche an ihrer der Hochdruckkammer zugewandten Seite fluchtend zur Achse des Hochdruckbehälters eine Aufnahme für einen Hydraulikzylinder mit seitlichen Anschlüssen für die Beaufschlagung mit Hydraulikflüssigkeit aufweist, und
• die Halbkreisscheiben (7a, 7b) einen Teil der Hydraulikdruck tragenden Außenhülle der Hydraulikzylinders bilden.

2. Vorrichtung nach Anspruch 1, **dadurch gekennzeichnet, dass** die halbkreisförmigen Scheiben (7a, 7b) freistichartige Aussparungen (8) aufweisen.

3. Vorrichtung nach Anspruch 2, **dadurch gekennzeichnet, dass** die freistichartigen Aussparungen (8) so konturiert sind, dass Belastungsspitzen an den halbkreisförmigen Scheiben (7a, 7b) im Bereich der Ausnehmung für den Hydraulikzylinder verringert werden.

4. Vorrichtung nach Anspruch 1, **dadurch gekennzeichnet, dass** der Hydraulikzylinderinnenteil (12) in einer Buchse aus elastischem Material schwimmend gelagert wird.

5. Vorrichtung nach Anspruch 1 und 4, **dadurch gekennzeichnet, dass** die Buchse mit der Dichtung der Hydraulik dicht verbunden ist.

## Claims

1. Device for the high-pressure treatment of goods in a closable high-pressure chamber, having
- a holding frame in which the high-pressure chamber (2) is held during the application of high pressure,
- a withdrawal device by means of which the high-pressure chamber (2) can be withdrawn laterally out of the holding frame,
- at least one end-side closure with a closure plug (3a, 3b) for the high-pressure chamber (2),
- at least one hydraulic drive for moving the end-side closure plug (3a, 3b) into the pressure vessel,
- a line system having ports, by means of which line system the high-pressure medium can be conveyed into the high-pressure chamber and conveyed out again after the treatment process,
- a support device (6a, 6b) which is arranged in movable fashion between the end sides of the high-pressure chamber (2) and the holding frame and which, during the application of high pressure, transmits the force between vessel closure and holding frame,
**characterized in that**
- the axial forces applied to the closure mechanism by the treatment pressure are absorbed by means of a force transmission device in the form of a semicircular disc (7a, 7b),
- the rounded side faces away from the high-pressure chamber,
- which force transmission device, at its side facing toward the high-pressure chamber, has in each case one vertical support surface above and below the axis of the high-pressure vessel,
- which force transmission device has, at its side facing toward the high-pressure chamber and in alignment with the axis of the high-pressure vessel, a receptacle for a hydraulic cylinder, with lateral ports for the pressurization with hydraulic fluid, and
- the semicircular discs (7a, 7b) form a part of the outer casing, which bears hydraulic pressure, of the hydraulic cylinder.

2. Device according to Claim 1, **characterized in that** the semicircular discs (7a, 7b) have undercut-like recesses (8).

3. Device according to Claim 2, **characterized in that** the undercut-like recesses (8) are contoured such that peak loads on the semicircular discs (7a, 7b) in the region of the recess for the hydraulic cylinder are reduced.

4. Device according to Claim 1, **characterized in that** the hydraulic cylinder inner part (12) is mounted in floating fashion in a bushing composed of an elastic material.

5. Device according to Claims 1 and 4, **characterized in that** the bushing is sealingly connected to the seal of the hydraulics.

## Revendications

1. Dispositif pour le traitement à haute pression de produits dans une chambre à haute pression pouvant être fermée, présentant
- un cadre de fixation dans lequel la chambre à haute pression (2) est retenue pendant la sollicitation avec une haute pression,
- un dispositif de sortie avec lequel la chambre à haute pression (2) peut être sortie latéralement hors du cadre de fixation,
- au moins une fermeture frontale avec un bouchon de fermeture (3a, 3b) pour la chambre à haute pression (2),
- au moins un entraînement hydraulique pour le déplacement du bouchon de fermeture frontal (3a, 3b) dans le récipient sous pression,
- un système de conduite avec des raccords avec lequel le milieu à haute pression est introduit dans la chambre à haute pression et est à nouveau ressorti de celle-ci après le traitement,
- un dispositif de support (6a, 6b) qui est disposé de manière à pouvoir être déplacé entre les côtés frontaux de la chambre à haute pression (2) et le cadre de fixation et qui, pendant la sollicitation avec une haute pression, transmet la force entre une fermeture du récipient et un cadre de fixation,
**caractérisé en ce que**
- la réception des forces axiales agissant à partir de la pression de traitement sur le mécanisme de fermeture est réalisée au moyen d'un dispositif de transfert de force façonné en tant que disque semi-circulaire (7, 7b),
- le côté rond est opposé à la chambre à haute pression,
- le dispositif de transfert de force présente au niveau de son côté tourné vers la chambre à haute pression à chaque fois une surface d'appui verticale au-dessus et en dessous de l'axe du récipient à haute pression,
- le dispositif de transfert de force présente au niveau de son côté tourné vers la chambre à haute pression en affleurement avec l'axe du récipient à haute pression un logement pour un cylindre hydraulique avec des raccords latéraux pour la sollicitation avec du liquide hydraulique, et
- les disques semi-circulaires (7a, 7b) forment une partie de l'enveloppe extérieure du cylindre hydraulique supportant une pression hydraulique.

2. Dispositif selon la revendication 1, **caractérisé en ce que** les disques semi-circulaires (7a, 7b) présentent des évidements (8) de type gorge.

3. Dispositif selon la revendication 2, **caractérisé en ce que** les évidements de type gorge (8) présentent un profilage tel que les pics de sollicitation au niveau des disques semi-circulaires (7a, 7b) soient réduits dans la région de l'évidement pour le cylindre hydraulique.

4. Dispositif selon la revendication 1, **caractérisé en ce que** la partie intérieure du cylindre hydraulique (12) est supportée de manière flottante dans une douille en matériau élastique.

5. Dispositif selon la revendication 1 et 4, **caractérisé en ce que** la douille est raccordée hermétiquement au joint d'étanchéité du système hydraulique.
